(19) Europäisches Patentamt / European Patent Office / Office européen des brevets

(11) **EP 4 603 722 B1**

(12) **FASCICULE DE BREVET EUROPEEN**

(45) Date de publication et mention
de la délivrance du brevet:
**15.04.2026 Bulletin 2026/16**

(21) Numéro de dépôt: **25155731.0**

(22) Date de dépôt: **04.02.2025**

(51) Classification Internationale des Brevets (IPC):
***F16H 25/22*** *(2006.01)*

(52) Classification Coopérative des Brevets (CPC):
**F16H 25/2204**

(54) **MÉCANISME DE VIS À BILLES À FILETS ANGULEUX ASYMÉTRIQUES**

KUGELGEWINDESPINDELMECHANISMUS MIT ASYMMETRISCHEM WINKELGEWINDE

BALL SCREW MECHANISM WITH ASYMMETRIC ANGLED THREADS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **13.02.2024 FR 2401384**

(43) Date de publication de la demande:
**20.08.2025 Bulletin 2025/34**

(73) Titulaire: **NTN Europe
74000 Annecy (FR)**

(72) Inventeur: **BERTHIER, Julien
74410 Saint Jorioz (FR)**

(74) Mandataire: **Alatis
3, rue Paul Escudier
75009 Paris (FR)**

(56) Documents cités:
**DE-A1- 102007 017 214    US-B1- 6 334 370**

**Description**

## DOMAINE TECHNIQUE DE L'INVENTION

L'invention se rapporte au domaine des vis à billes, et plus précisément aux filets d'un tel mécanisme de vis.

## ÉTAT DE LA TECHNIQUE ANTÉRIEURE

Dans le document DE102007017214 est divulgué un mécanisme de vis à bille, comportant une vis définissant un axe de référence, un écrou et au moins deux billes roulant sur un filet de vis formé sur la vis et un filet d'écrou formé sur l'écrou. Ce mécanisme comporte des filets dont les flancs ont des rayons de courbure différents. Lorsque le mécanisme est sollicité avec des efforts de faible amplitude dans une direction axiale donnée correspondant à un fonctionnement normal, les billes sont en contact avec un flanc de grand rayon de courbure du filet de vis et avec un flanc de grand rayon de courbure du filet d'écrou, afin de minimiser les frottements. Lorsque le mécanisme au repos est sollicité axialement dans une direction opposée à la direction de fonctionnement normal, les billes viennent en appui contre un flanc de faible rayon de courbure du filet de vis et un flanc de faible rayon de courbure du filet d'écrou, de façon à pouvoir reprendre des efforts statiques de grande amplitude, au prix d'un frottement plus important. Ce mécanisme n'est toutefois pas adapté à une application dans laquelle les efforts exercés sur le mécanisme en mouvement ont une forte amplitude et une direction axiale constante, quelle que soit la direction de rotation du mécanisme.

## EXPOSÉ DE L'INVENTION

L'invention vise à remédier aux inconvénients de l'état de la technique et à proposer un mécanisme de vis à bille pouvant tourner sans frottement excessif dans les deux sens de rotation, tout en étant soumis à des efforts axiaux d'amplitude élevée qui sont appliqués toujours dans la même direction axiale.

Pour ce faire est proposé, selon un premier aspect de l'invention, un mécanisme de vis à billes, comportant une vis définissant un axe de référence, un écrou et au moins deux billes de rayon R positionnées de façon à rouler sur un filet de vis formé sur la vis et un filet d'écrou formé sur l'écrou, le filet de vis et le filet d'écrou ayant, dans une portion active de la vis et de l'écrou, un pas d'hélice P, **caractérisé en ce que** dans un plan de coupe contenant l'axe de référence et passant par un centre d'une première bille parmi les au moins deux billes, la première bille étant positionnée dans la portion active de la vis et de l'écrou, tout segment perpendiculaire à l'axe de référence, situé à une distance x du centre de la première bille, et ayant une première extrémité qui appartient au filet de vis et une deuxième extrémité qui appartient au filet d'écrou, présente un centre qui, dans un repère orthonormé ayant un axe d'abscisse confondu avec l'axe de référence et un axe des ordonnées qui passe par le centre de la première bille, a une abscisse égale à $x$ et une ordonnée $y$, définissant une fonction $x \rightarrow y = f(x)$ qui, lorsque $x$ varie entre 0 et P, passe par un minimum Y0 atteint pour une abscisse X0 et par un maximum Y1 atteint pour une abscisse X1, tels que les inégalités suivantes sont respectées :

$$\begin{cases} \dfrac{9}{10}R < X0 < P - \dfrac{9}{10}R \\ \dfrac{9}{10}R < X1 < P - \dfrac{9}{10}R \\ Y1 - Y0 > 0{,}10\,\text{mm} \end{cases}$$

Par ailleurs, tout segment perpendiculaire à l'axe de référence, situé à une distance x du centre de la première bille, et ayant une première extrémité qui appartient au filet de vis et une deuxième extrémité qui appartient au filet d'écrou, présente une longueur L définissant une fonction $x \rightarrow L = g(x)$ qui, lorsque l'abscisse x du centre du segment varie entre 0 et le pas d'hélice P, est toujours supérieure à 0,25 mm, et de préférence, supérieure à 0,40 mm.

Le filet de vis est radialement en saillie dans la zone située au voisinage de l'abscisse X1 du maximum, et en dépression dans une zone située au voisinage de l'abscisse X0 du minimum. Inversement, le filet d'écrou est radialement en saillie dans la zone située au voisinage de l'abscisse X0 du minimum, et en dépression dans une zone située au voisinage de l'abscisse X1 du maximum. Ceci permet, lorsqu'un effort est appliqué à l'écrou dans une direction axiale d'effort privilégiée allant de l'abscisse X1 vers l'abscisse X0, de bénéficier d'une aire de contact importante entre les billes et les filets de la vis et de l'écrou, ce qui confère au mécanisme une capacité élevée. Dans la direction axiale opposée, les aires de contact disponibles sont moins importantes, ce qui n'est pas pénalisant dans la mesure où les efforts attendus restent faibles. La distance L minimum préservée entre filet de vis et filet d'écrou permet d'assurer une bonne lubrification du mécanisme. Elle permet en outre d'éviter tout contact entre vis et écrou même sous des charges et déformations élevées.

De préférence :

$$Y1 - Y0 > 0{,}20 mm$$

Suivant un mode de réalisation :

- le filet de vis forme un chemin de roulement intérieur hélicoïdal tourné radialement à l'opposé de l'axe de référence et délimité par deux flancs opposés du filet de vis situés de part et d'autre d'un fond du filet de vis,

- le filet d'écrou forme un chemin de roulement extérieur hélicoïdal tourné radialement vers l'axe de référence et délimité par deux flancs opposés du filet d'écrou situés de part et d'autre d'un fond du filet d'écrou,

- un flanc prolongé parmi les deux flans du filet d'écrou est prolongé vers l'axe de référence par rapport à l'autre des deux flancs du filet d'écrou,

- un flanc prolongé parmi les deux flancs du filet de vis est prolongé dans une direction radiale opposée à l'axe de référence par rapport à l'autre des deux flancs du filet de vis, et

- le flanc prolongé du filet d'écrou se trouve radialement en regard de l'autre flanc du filet de vis et le flanc prolongé du filet de vis se trouve radialement en regard de l'autre flanc du filet d'écrou, le flanc prolongé du filet d'écrou et le flanc prolongé du filet de vis étant axialement tournés l'un vers l'autre.

Dans une direction axiale d'effort privilégiée correspondant à un contact entre les billes et les flancs prolongés du filet de vis et du filet d'écrou, l'ellipse de contact peut s'étendre sur une surface plus importante des flancs prolongés des deux filets, y compris dans les zones correspondant aux prolongements des flancs. Cette dissymétrie permet d'augmenter la capacité du mécanisme dans cette direction, tout en préservant entre la vis et l'écrou un espace suffisant, dans la zone située entre deux spires successives, pour une bonne lubrification du mécanisme. La dissymétrie des flancs a pour conséquence que la surface disponible des flancs non prolongés est moindre pour constituer l'interface de contact avec les billes, se traduisant par une moindre capacité du mécanisme dans la direction d'efforts opposée à la direction privilégiée, ce qui n'est toutefois pas un problème puisque dans l'application envisagée, les efforts dans cette direction sont faibles, voire nuls.

De préférence, les deux flancs du filet de vis ont, dans un plan de coupe perpendiculaire au fond du filet de vis, un rayon de courbure en tout point supérieur au rayon R des billes. De même, les deux flancs du filet d'écrou ont de préférence, dans un plan de coupe perpendiculaire au fond du filet d'écrou, un rayon de courbure en tout point supérieur au rayon R des billes. On assure ainsi une bonne maîtrise de l'interface de contact, quasi-ponctuelle, entre les billes et les flancs du filet de vis et du filet d'écrou.

De préférence, les deux flancs du filet de vis ont une courbure en arc de cercle dans un plan de coupe perpendiculaire au fond du filet de vis et les deux flancs du filet d'écrou ont une courbure en arc de cercle dans un plan de coupe perpendiculaire au fond du filet d'écrou. De préférence, une ou plusieurs des conditions suivantes sont réalisées :

- les deux flancs du filet de vis ont un rayon de courbure identique ; et/ou

- les deux flancs du filet d'écrou ont un rayon de courbure identique ; et/ou

- au moins un des deux flancs du filet de vis a un rayon de courbure identique à au moins un des deux flancs du filet d'écrou.

Ainsi, le coefficient de frottement entre billes et chemins de roulement est indépendant du sens d'application de l'effort axial (dans la direction privilégiée ou la direction opposée), pour une amplitude donnée de la résultante de force axiale.

Selon un mode de réalisation, les valeurs X0 et X1 vérifient les inéquations suivantes :

$$\begin{cases} R < X0 < P - R \\ et \\ R < X1 < P - R \end{cases}$$

Suivant un mode de réalisation, les deux extrêmes vérifient la double inégalité suivante, où D est la distance D entre le centre de la première bille et l'axe de référence :

$$Y0 < D < Y1$$

Selon un mode de réalisation, $D - Y0 - \varepsilon < Y1 - D < D - Y0 + \varepsilon$ ; $\varepsilon$ désignant une marge de distorsion telle que $0 < \varepsilon < 0,05mm$.

Selon un mode de réalisation, la fonction la fonction $x \rightarrow y = f(x)$ est telle que, toute valeur z comprise entre 0 et $P/2 - R$, où R est le rayon des aux moins deux billes, on observe :

$$\begin{cases} 2f\left(\frac{P}{2}\right) - \varepsilon1 < f\left(\frac{P}{2} + z\right) + f\left(\frac{P}{2} - z\right) < 2f\left(\frac{P}{2}\right) + \varepsilon1 \\ \text{avec } \varepsilon1 < 0,05\text{mm} \end{cases}$$

Ces inéquations traduisent une symétrie approximative de la fonction $x \rightarrow y = f(x)$, avec une marge de distorsion $\varepsilon1$ , autour et à proximité d'un centre de symétrie situé à l'abscisse $P/2$.

Suivant un mode de réalisation :

$$\text{D} - \varepsilon1 < f\left(\frac{P}{2}\right) < \text{D} + \varepsilon1$$

Suivant un mode de réalisation :

$$\frac{X0 + X1}{2} = \frac{P}{2}$$

Selon un mode de réalisation, la fonction $x \rightarrow y = f(x)$ est continue.

Selon un mode de réalisation, la fonction $x \rightarrow y = f(x)$ est strictement croissante ou strictement décroissante entre X0 et X1.

À proximité du centre des billes, la fonction $x \rightarrow y = f(x)$ est relativement constante. Ainsi, D désignant la distance entre le centre de la première bille et l'axe de référence, et $\varepsilon$ désignant une marge de distorsion telle que $0 < \varepsilon < 0,05mm$, on observe :

-

$$\text{pour } 0 < x < \frac{9R}{10}, \qquad \text{D} - \varepsilon < f(x) < \text{D} + \varepsilon$$

-

$$\text{pour } P - \frac{9R}{10} < x < P, \qquad \text{D} - \varepsilon < f(x) < \text{D} + \varepsilon$$

**BRÈVE DESCRIPTION DES FIGURES**

D'autres caractéristiques et avantages de l'invention ressortiront à la lecture de la description qui suit, en référence aux figures annexées qui illustrent :

- [Fig. 1] la figure 1, un mécanisme de vis à bille en coupe axiale, illustrant notamment des billes circulant sur des chemins de roulement d'un écrou et d'une vis du mécanisme de vis à billes ;

- [Fig. 2] La figure 2, une vue détaillée d'un filet de l'écrou et d'un filet de la vis à billes.

- [Fig. 3] La figure 3 illustre une courbe d'évolution de la distance radiale entre le milieu d'un segment imaginaire séparant les deux filets du mécanisme de vis à billes et un axe de référence, ainsi qu'une courbe d'évolution de la longueur dudit segment imaginaire, en fonction de la distance axiale au centre d'une bille du mécanisme.

Pour plus de clarté, les éléments identiques ou similaires sont repérés par des signes de référence identiques sur l'ensemble des figures.

## DESCRIPTION DÉTAILLÉE DE MODES DE REALISATION

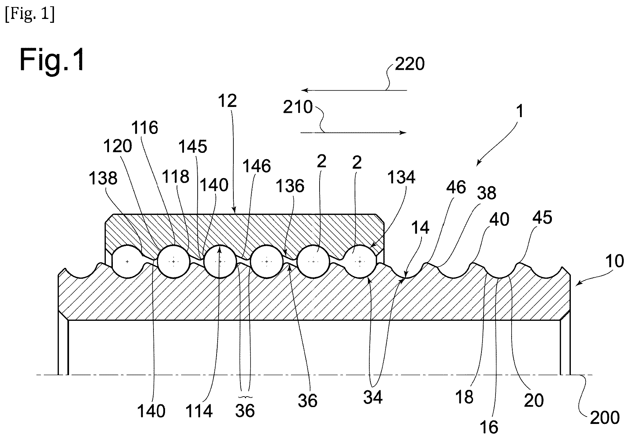

Sur la figure 1 est illustré un mécanisme de vis à billes **1** comportant deux composants filetés, à savoir une vis **10** et un écrou **12,** et des billes **2.** La vis **10** est de préférence métallique, par exemple en acier, et présente un filet de vis **34** qui forme un chemin de roulement hélicoïdal intérieur **14** autour d'un axe de référence **200** du mécanisme de vis à billes **1** défini par la vis **10,** le chemin de roulement hélicoïdal intérieur **14** étant tourné radialement à l'opposé de l'axe de référence **200.** L'écrou **12** est de préférence métallique, par exemple en acier, et présente un filet d'écrou **134** qui forme un chemin de roulement hélicoïdal extérieur **114** autour de l'axe de référence **200,** et tourné radialement vers l'axe de référence **200.** L'un des deux composants filetés, à savoir la vis **10** ou l'écrou **12,** forme en outre un canal de recirculation, non représenté sur les figures, qui enjambe de préférence plusieurs spires des chemins de roulement **14, 114** de la vis **10** et de l'écrou **12.** Les billes **2** peuvent être par exemple réalisées en acier ou en céramique, et sont dimensionnées et positionnées pour circuler en circuit fermé entre le chemin de roulement hélicoïdal extérieur **114** de l'écrou **12** et le chemin de roulement hélicoïdal intérieur **14** de la vis **10,** ainsi que dans le canal de recirculation, de préférence sans séparateurs entre les billes **2.**

Le chemin de roulement hélicoïdal intérieur **14** de la vis **10** présente, sur au moins une partie active, une enveloppe hélicoïdale de pas constant P autour de l'axe de référence **200,** avec un fond de chemin **16,** ainsi qu'un premier flanc **18** et un deuxième flanc **20** se faisant face de part et d'autre du fond de chemin **16,** le premier flanc **18** étant tourné dans un premier sens axial **210** de l'axe de référence **200,** le deuxième flanc **20** étant tourné dans un deuxième sens axial **220** de l'axe de référence **200.**

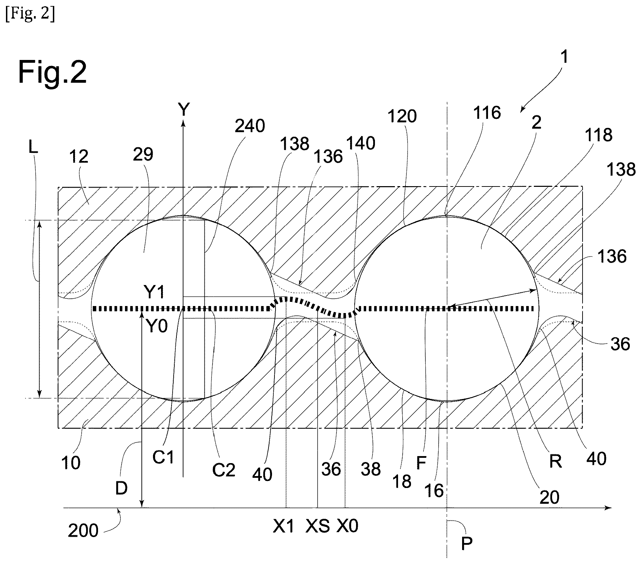

Dans la suite de la description, nous nous référerons aux figures 1 et 2 où le mécanisme de vis à billes **1** est représenté dans une vue en coupe. La coupe de la figure 2 est effectuée dans un plan de coupe contenant l'axe de référence **200** et passant par un centre de l'une des billes.

Les flancs **18, 20** du chemin de roulement hélicoïdal **14** de la vis **10** ont de préférence une section concave, dans tout plan contenant l'axe de référence **200.** Ces sections concaves sont à rayon de courbure non constant dans le plan de la figure 2. Toutefois, observés dans tout plan de coupe perpendiculaire à une tangente au fond de chemin 16, donc dans un plan incliné de la valeur de l'angle d'hélice par rapport au plan de la figure 2, les flancs **18, 20** sont de préférence en arc de cercle, et de préférence avec des rayons de courbure égaux pour les deux flancs, de façon à former une ogive s'étendant de part et d'autre du fond de chemin **16,** ou un arc de cercle continu. L'angle d'hélice est toutefois suffisamment faible pour que, dans le plan de coupe de la figure 2, les variations du rayon de courbure et du centre de courbure des flancs **18, 20** soient faibles, par exemple inférieure à 0,1 mm.

Le premier flanc **18** présente une extrémité **38** opposée au fond de chemin **16.** Le deuxième flanc **20** présente une extrémité **40** opposée au fond de chemin **16.**

L'extrémité **38** du premier flanc **18** de la vis **10** est radialement moins éloignée de l'axe de référence **200** que l'extrémité **40** du deuxième flanc **20** de la vis **10.**

Le chemin de roulement **14** hélicoïdal de la vis **10** comporte plusieurs spires successives séparées par des portions de liaison **36** saillantes du filet de vis **34.** Chaque portion de liaison **36** lie les extrémités **38, 40** des flancs **18, 20** de la vis **10.** La portion de liaison **36** forme une courbe rectiligne **46** au voisinage de l'extrémité **38** du premier flanc **18** du chemin de roulement **14** de la vis **10,** l'extrémité **38** constituant un point d'inflexion avec deux demi-tangentes faisant entre elles un angle obtu. La portion de liaison **36** présente une courbure convexe **45** au voisinage de l'extrémité **40** du deuxième flanc **20** du chemin de roulement **14** de la vis **10,** cette extrémité **40** constituant un point d'inflexion, la surface du filet de vis 34 traversant sa tangente en ce point d'inflexion **40.**

Le chemin de roulement hélicoïdal extérieur **114** de l'écrou **12** présente, sur au moins une partie active, une enveloppe hélicoïdale de pas constant P autour de l'axe de référence **200,** avec un fond de chemin **116,** ainsi qu'un premier flanc **118** et un deuxième flanc **120** se faisant face de part et d'autre du fond de chemin **116,** le premier flanc **118** étant tourné dans le deuxième sens axial **220** de l'axe de référence **200,** axialement en regard du premier flanc **18** du chemin de roulement **14** de la vis **10** et radialement en regard du deuxième flanc **20** du chemin de roulement **14** de la vis **10,** le deuxième flanc **120** étant tourné dans un premier sens axial **210** de l'axe de référence **200,** axialement en regard du deuxième flanc **20** du chemin de roulement **14** de la vis **10** et radialement en regard du premier flanc **18** du chemin de roulement **14** de la vis **10.**

Les flancs **118, 120** du chemin de roulement hélicoïdal **114** de l'écrou **12** ont de préférence une section concave dans tout plan contenant l'axe de référence **200.** Ces sections concaves sont à rayon de courbure non constant dans le plan de la figure 2. Toutefois, observés dans tout plan de coupe perpendiculaire à une tangente au fond de chemin **116,** donc dans un plan incliné de la valeur de l'angle d'hélice par rapport au plan de la figure 2, les flancs **118, 120** sont de préférence en arc de cercle, et de préférence avec des rayons de courbure égaux pour les deux flancs, de façon à former une ogive s'étendant de part et d'autre du fond de chemin **116,** ou un arc de cercle continu. L'angle d'hélice est toutefois suffisamment faible pour que, dans le plan de coupe de la figure 2, les variations du rayon de courbure et du centre de courbure des flancs **118, 120** soient faibles, par exemple inférieure à 0,1 mm.

Le premier flanc **118** présente une extrémité **138** opposé au fond de chemin **116.** Le deuxième flanc **120** présente une extrémité **140** opposée au fond de chemin **116.** L'extrémité **138** du premier flanc **118** de l'écrou **12** est radialement plus éloignée de l'axe de référence **200** que l'extrémité **140** du deuxième flanc **120** de l'écrou **12.** Le chemin de roulement **114** hélicoïdal de l'écrou **12** comporte plusieurs spires successives séparées par des portions saillantes de liaison **136** du filet d'écrou **134.** Chaque portion de liaison **136** lie les extrémités **138, 140** des flancs **118, 120** de l'écrou **12.** La portion de liaison **136** forme une courbe rectiligne **146** au voisinage de l'extrémité **138** du premier flanc **18** du chemin de roulement **114** de l'écrou **12,** l'extrémité **138** constituant un point d'inflexion avec deux demi-tangentes faisant entre elles un angle obtu. La portion de liaison **136** présente une courbure convexe **145** au voisinage de l'extrémité **140** du deuxième flanc **120** du chemin de roulement **114** de l'écrou **12,** cette extrémité **140** constituant un point d'inflexion, la surface du filet d'écrou **134** traversant sa tangente en ce point d'inflexion **140.**

Ainsi, le deuxième flan **120** du filet d'écrou **134** est prolongé vers l'axe de référence **200** par rapport au premier flanc **118** du filet d'écrou **134.** De façon similaire, le deuxième flanc **20** du filet de vis **34** est prolongé dans la direction radiale opposée à l'axe de référence **200** par rapport au premier flanc **18** du filet de vis **34.** Le flanc prolongé **120** du filet d'écrou **134** se trouve radialement en regard du flanc non prolongé **18** du filet de vis **34** et, de façon similaire, le flanc prolongé **20** du filet de vis **34** se trouve radialement en regard du flanc non prolongé **118** du filet d'écrou **134.** Les flancs prolongés **120** et **20** sont en regard l'un de l'autre de part et d'autre du centre de bille 2.

Pour décrire le volume délimité par le filet de vis **34** et le filet d'écrou **134** dans le plan de la figure 1 et de la figure 2, on définit un repère orthonormé **R** ayant un axe d'abscisse confondu avec l'axe de référence **200** et un axe des ordonnées qui passe par le centre **C1** de la première bille **2a.** On peut alors observer un segment **240** imaginaire quelconque perpendiculaire à l'axe de référence **200** situé à une distance x d'un centre **C1** d'une première bille **2a,** la distance x variant de 0 à P, P étant la valeur du pas d'hélice du filet de vis **34** et du filet d'écrou **134.** Le segment **240** présente une première extrémité appartenant au filet de vis **34** ainsi qu'une seconde extrémité appartenant au filet d'écrou **134.**

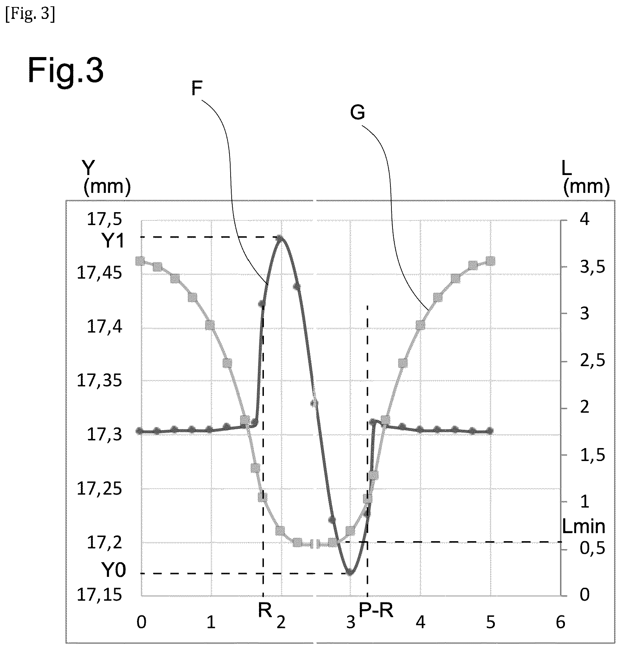

Le segment **240** présente un centre **C2** qui a pour coordonnées x en abscisse et y en ordonnées, définissant une fonction $x \rightarrow y = f(x)$ dont la courbe **F** est illustrée schématiquement en superposition sur la figure 3, et en référence à l'échelle de gauche sur le graphe de la figure 3, l'axe des abscisses étant gradué par unités correspondant chacune à $1/5^{\text{ème}}$ de P. Les valeurs numériques proposées ont un caractère purement illustratif. En pratique,

La fonction $x \rightarrow y = f(x)$ passe par un minimum Y0 atteint pour une abscisse X0 ainsi que par un maximum Y1 atteint pour une abscisse X1, où les valeurs X0 et X1 sont chacune supérieures au rayon des billes **2.** La fonction $x \rightarrow y = f(x)$ est continument croissante ou continument décroissante entre X0 et X1, et est plus généralement continue sur toute la longueur de la vis **10.**

À l'intérieur des chemins de roulement **14, 114,** le centre du segment **240** reste à une distance de l'axe de référence qui est proche de la valeur D, ce qu'on peut exprimer en fonction d'une ε désignant une marge de distorsion telle que $0 < \varepsilon < 0,05mm$, par :

-

$$\text{pour } 0 < x < \frac{9R}{10}, \qquad D - \varepsilon < f(x) < D + \varepsilon$$

-

$$\text{pour } P - \frac{9R}{10} < x < P, \qquad D - \varepsilon < f(x) < D + \varepsilon$$

Le centre **C1** de la première bille **2a** est distant de l'axe de référence **200** d'une distance D qui correspond à un demi-diamètre primitif du mécanisme. Le minimum Y0 est inférieur à la distance D, tandis que Y1 est supérieur à la distance D. Le minimum Y0 est atteint pour une abscisse X0 telle que

$$R < X0 < P - R$$

Le maximum Y1 est quant à lui atteint pour une abscisse X1 telle que :

$$R < X1 < P - R$$

Le mécanisme de vis à billes **1** présente de préférence une symétrie approximative dans le plan de coupe des figures 1 et 2, telle que

$$D - Y0 - \varepsilon < Y1 - D < D - Y0 + \varepsilon \; ;$$

$\varepsilon$ désignant une marge de distorsion telle que $0 < \varepsilon < 0{,}05$mm.

De manière plus générale, la symétrie centrale que présente le mécanisme à bille **1** au centre de symétrie situé à l'abscisse XS=(X1+X0)/2 ou XS=P/2, et à l'ordonnée YS=D, peut s'écrire

$$2f\left(\frac{P}{2}\right) - \varepsilon 1 < f\left(\frac{P}{2} + z\right) + f\left(\frac{P}{2} - z\right) < 2f\left(\frac{P}{2}\right) + \varepsilon 1$$

$\varepsilon 1$ désignant une marge de distorsion telle que $0 < \varepsilon 1 < 0{,}05 mm$.

Dans ces inéquations, $\varepsilon$ et $\varepsilon 1$ rendent compte de l'inclinaison des filets hélicoïdaux par rapport au plan de coupe axial des figures 1 et 2, donc de l'angle d'hélice et du diamètre primitif 2D du mécanisme.

Les marges de distorsion $\varepsilon$ et $\varepsilon 1$ sont liées à l'inclinaison des filets hélicoïdaux par rapport au plan de coupe axial des figures 1 et 2, et sont fonction de l'angle d'hélice et du diamètre primitif 2D du mécanisme. Les valeurs de $\varepsilon$ et $\varepsilon 1$ sont inférieures à D/10, et de préférence à D/50.

En pratique, la différence Y1 - Y0 est significative, et respecte l'inégalité suivante :

$$Y1 - Y0 > 0{,}10\text{mm}$$

De préférence :

$$Y1 - Y0 > 0{,}20mm$$

Par ailleurs, la longueur L du segment **240** varie en fonction de l'abscisse x du segment 240, définissant une fonction $x \to g(x) = L$, dont la courbe **G** est illustrée sur le graphe de la figure 3, en référence à l'échelle de droite pour les ordonnées. La fonction $x \to L = g(x)$, passe par une valeur minimale *Lmin,* elle-même supérieure ou égale à 0,25mm, de préférence supérieure à 0,40mm, par exemple supérieure à 0,45mm ou 0,50mm, d'une part pour garantir une circulation de graisse satisfaisante entre les spires des chemins de roulement et d'autre part pour éviter les chocs entre les filets de la vis et de l'écrou sous de fortes charges et de fortes déformations, notamment dans la zone correspondant aux portions de liaison **36, 136** ou cette valeur minimale est éventuellement atteinte.

La direction axiale **210** est une direction privilégiée pour les efforts appliqués par l'écrou **12** sur les billes **2** et pour les efforts appliqués par les billes **2** et par la vis **10** : lorsque l'écrou applique sur les billes **2** un effort dont la résultante a une composante axiale dans la direction axiale **210**, l'ellipse de contact entre chaque bille **2** et le chemin de roulement **114** de l'écrou **12** est formée sur le deuxième flanc **120,** et peut s'étendre sur une surface importante du deuxième flanc, y compris dans la zone correspondant au prolongement de ce deuxième flanc **120**. De même, l'ellipse de contact entre chaque bille **2** et le chemin de roulement **14** de la vis **10** est formée sur le deuxième flanc **20,** et peut s'étendre sur une surface importante du deuxième flanc **20,** y compris dans la zone correspondant au prolongement de ce deuxième flanc **20**.

Cette dissymétrie permet d'augmenter la capacité du mécanisme dans cette direction, tout en préservant entre la vis et l'écrou un espace suffisant, dans la zone située radialement entre les portions de liaison **36, 136,** pour une bonne lubrification du mécanisme.

La dissymétrie des flancs a également pour conséquence que la surface disponible au niveau des flancs non prolongés **18, 118** est moindre pour constituer une interface de contact avec les billes, de sorte que la capacité du mécanisme dans la direction d'efforts **220** opposée à la direction privilégiée **210,** est sensiblement inférieure à la capacité dans la direction privilégiée **210,** ce qui n'est toutefois pas un problème dès lors que dans l'application envisagée, les efforts axiaux sont unidirectionnels ou essentiellement unidirectionnels.

## Revendications

1. Mécanisme de vis à billes (1), comportant une vis (10) définissant un axe de référence (200), un écrou (12) et au moins deux billes (2) de rayon R positionnées de façon à rouler sur un filet de vis (34) formé sur la vis (10) et un filet d'écrou (134) formé sur l'écrou (12), le filet de vis (34) et le filet d'écrou (134) ayant, dans une portion active de la vis et de l'écrou, un pas d'hélice P, **caractérisé en ce que** dans un plan de coupe contenant l'axe de référence (200) et passant par un centre (C1) d'une première bille (2a) parmi les au moins deux billes (2), la première bille étant positionnée dans la portion active de la vis et de l'écrou, tout segment (240) perpendiculaire à l'axe de référence (200), situé à une distance x du centre (C1) de la première bille (2a), et ayant une première extrémité qui appartient au filet de vis (34) et une deuxième extrémité qui appartient au filet d'écrou (134), présente :

- un centre (C2) qui, dans un repère orthonormé ayant un axe d'abscisse confondu avec l'axe de référence (200) et un axe des ordonnées qui passe par le centre (C1) de la première bille (2a), a une abscisse égale à x et une ordonnée y, définissant une fonction $x \to y = f(x)$ qui, lorsque x varie entre 0 et P, passe par un minimum Y0 atteint pour une abscisse X0 et par un maximum Y1 atteint pour une abscisse X1, tels que les inégalités suivantes sont respectées :

$$\begin{cases} \dfrac{9}{10}R < X0 < P - \dfrac{9}{10}R \\ \dfrac{9}{10}R < X1 < P - \dfrac{9}{10}R \\ Y1 - Y0 > 0{,}10\text{mm} \end{cases}$$

et
- une longueur L définissant une fonction $x \to L = g(x)$ qui, lorsque l'abscisse x du centre du segment (C2) varie entre 0 et le pas d'hélice P, est toujours supérieure à 0,25 mm, et de préférence, supérieure à 0,40 mm.

2. Mécanisme de vis à billes (1) selon la revendication 1, **caractérisé en ce que**

- le filet de vis (34) forme un chemin de roulement intérieur (14) hélicoïdal tourné radialement à l'opposé de l'axe de référence (200) et délimité par deux flancs (18, 20) opposés du filet de vis (34) situés de part et d'autre d'un fond (16) du filet de vis (34),
- le filet d'écrou (134) forme un chemin de roulement extérieur (114) hélicoïdal tourné radialement vers l'axe de référence (200) et délimité par deux flancs (118, 120) opposés du filet d'écrou (134) situés de part et d'autre d'un fond (116) du filet d'écrou (134),
- un flanc prolongé (120) parmi les deux flans du filet d'écrou (134) est prolongé vers l'axe de référence (200) par rapport à l'autre des deux flancs (118) du filet d'écrou (134),
- un flanc prolongé (20) parmi les deux flancs du filet de vis (34) est prolongé dans une direction radiale opposée à l'axe de référence (200) par rapport à l'autre des deux flancs (18) du filet de vis (34),
- le flanc prolongé (120) du filet d'écrou (134) se trouve radialement en regard de l'autre flanc (18) du filet de vis (34) et le flanc prolongé (20) du filet de vis (34) se trouve radialement en regard de l'autre flanc (118) du filet d'écrou (134), le flanc prolongé (120) du filet d'écrou (134) et le flanc prolongé (20) du filet de vis (34) étant axialement tournés l'un vers l'autre.

3. Mécanisme de vis à billes (1) selon la revendication 2, **caractérisé en ce que** les deux flancs (18, 20) du filet de vis (34) ont une courbure en arc de cercle dans un plan de coupe perpendiculaire au fond (16) du filet de vis (34) et les deux flancs (118, 120) du filet d'écrou (134) ont une courbure en arc de cercle dans un plan de coupe perpendiculaire au fond (118) du filet d'écrou (134), et, de préférence,

- les deux flancs (18, 20) du filet de vis (34) ont un rayon de courbure identique ; et/ou
- le deux flancs (118, 120) du filet d'écrou (134) ont un rayon de courbure identique ; et/ou
- au moins un des deux flancs (18, 20) du filet de vis (12) a un rayon de courbure identique à au moins un des deux flancs (118, 120) du filet d'écrou (134).

4. Mécanisme de vis à billes (1) selon l'une quelconque des revendications précédentes, **caractérisé en ce que** $D - Y0 - \varepsilon < Y1 - D < D - Y0 + \varepsilon$ ; D désignant la distance entre le centre de la première bille (2a) et l'axe de référence (200), $\varepsilon$ désignant une marge de distorsion telle que $0 < \varepsilon < 0{,}05mm$.

5. Mécanisme de vis à billes (1) selon l'une quelconque des revendications précédentes, **caractérisé en ce que** la fonction $x \to y = f(x)$ est telle que, pour toute valeur z comprise entre 0 et P/2 - R, où R est le rayon des aux moins deux billes (2) :

$$\begin{cases} 2f\left(\dfrac{P}{2}\right) - \varepsilon 1 < f\left(\dfrac{P}{2} + z\right) + f\left(\dfrac{P}{2} - z\right) < 2f\left(\dfrac{P}{2}\right) + \varepsilon 1 \\ avec\ \varepsilon 1 < 0{,}05mm \end{cases}$$

**6.** Mécanisme de vis à billes (1) selon l'une quelconque des revendications précédentes, **caractérisé en ce que**

$$\frac{X0 + X1}{2} = \frac{P}{2}$$

**7.** Mécanisme de vis à billes (1) selon l'une quelconque des revendications précédentes, **caractérisé en ce que** la fonction $x \rightarrow y = f(x)$ est continue.

**8.** Mécanisme de vis à billes (1) selon l'une quelconque des revendications précédentes, **caractérisé en ce que** la fonction $x \rightarrow y = f(x)$ est strictement croissante ou strictement décroissante entre X0 et X1.

**9.** Mécanisme de vis à billes (1) selon l'une quelconque des revendications précédentes, **caractérisé en ce que** :

$$Y1 - Y0 > 0{,}20mm$$

**10.** Mécanisme de vis à billes (1) selon l'une quelconque des revendications précédentes, **caractérisé en ce que** :

-

$$\text{pour } 0 < x < \frac{9}{10}R, \qquad D - \varepsilon < f(x) < D + \varepsilon$$

-

$$\text{pour } P - \frac{9}{10}R < x < P, \qquad D - \varepsilon < f(x) < D + \varepsilon$$

D désignant la distance entre le centre de la première bille (2a) et l'axe de référence (200), $\varepsilon$ désignant une marge de distorsion telle que $0 < \varepsilon < 0{,}05mm$.

**Patentansprüche**

**1.** Kugelgewindemechanismus (1), umfassend eine Schraube (10), die eine Bezugsachse (200) definiert, eine Mutter (12) und mindestens zwei Kugeln (2) mit dem Radius R, die positioniert sind, um auf einem Schraubengewinde (34), das auf der Schraube (10) gebildet ist, und einem Muttergewinde (134), das auf der Mutter (12) gebildet ist, zu rollen, wobei das Schraubengewinde (34) und das Muttergewinde (134) in einem aktiven Abschnitt der Schraube und der Mutter eine Schaubensteigung P aufweisen, **dadurch gekennzeichnet, dass** in einer Schnittebene, die die Bezugsachse (200) enthält und durch ein Zentrum (C1) einer ersten Kugel (2a) der mindestens zwei Kugeln (2) verläuft, wobei die erste Kugel im aktiven Abschnitt der Schraube und der Mutter positioniert ist, jedes Segment (240) senkrecht zur Bezugsachse (200), das sich in einem Abstand x vom Zentrum (C1) der ersten Kugel (2a) befindet und ein erstes Ende, das zum Schraubengewinde (34) gehört, und ein zweites Ende, das zum Muttergewinde (134) gehört, aufweist:

- ein Zentrum (C2), das in einem orthonormalen Referenzrahmen, der eine mit der Referenzachse (200) zusammenfallende Abszissenachse und eine durch das Zentrum (C1) der ersten Kugel (2a) verlaufende Ordinatenachse aufweist, eine Abszisse gleich x und eine Ordinate y besitzt, die eine Funktion $x \rightarrow y = f(x)$ definiert, die, wenn x zwischen 0 und P variiert, durch ein für eine Abszisse X0 erreichtes Minimum Y0 und durch ein für eine Abszisse X1 erreichtes Maximum Y1 verläuft, sodass die folgenden Ungleichungen beachtet werden:

$$\begin{cases} \dfrac{9}{10}R < X0 < P - \dfrac{9}{10}R \\ \dfrac{9}{10}R < X1 < P - \dfrac{9}{10}R \\ Y1 - Y0 > 0{,}10 \text{ mm} \end{cases}$$

und

- eine Länge L, die eine Funktion $x \rightarrow L = g(x)$ definiert, die, wenn die Abszisse x des Zentrums des Segments (C2) zwischen 0 und der Schaubensteigung P variiert, immer größer als 0,25 mm und vorzugsweise größer als 0,40 mm ist.

2. Kugelgewindemechanismus (1) nach Anspruch 1, **dadurch gekennzeichnet, dass**

- das Schraubengewinde (34) eine schraubenförmige innere Laufbahn (14) bildet, die radial von der Bezugsachse (200) abgewandt ist und von zwei gegenüberliegenden Flanken (18, 20) des Schraubengewindes (34) begrenzt wird, die sich auf beiden Seiten eines Bodens (16) des Schraubengewindes (34) befinden,
- das Muttergewinde (134) eine schraubenförmige äußere Laufbahn (114) bildet, die radial in Richtung der Bezugsachse (200) weist und von zwei gegenüberliegenden Flanken (118, 120) des Muttergewindes (134) begrenzt wird, die sich auf beiden Seiten eines Bodens (116) des Muttergewindes (134) befinden,
- eine verlängerte Flanke (120) der beiden Flanken des Muttergewindes (134) in Bezug auf die andere der beiden Flanken (118) des Muttergewindes (134) in Richtung der Bezugsachse (200) verlängert ist,
- eine verlängerte Flanke (20) der beiden Flanken des Schraubengewindes (34) in einer radialen Richtung entgegengesetzt zur Bezugsachse (200) in Bezug auf die andere der beiden Flanken (18) des Schraubengewindes (34) verlängert ist,
- die verlängerte Flanke (120) des Muttergewindes (134) radial der anderen Flanke (18) des Schraubengewindes (34) zugewandt ist und die verlängerte Flanke (20) des Schraubengewindes (34) radial der anderen Flanke (118) des Muttergewindes (134) zugewandt ist, wobei die verlängerte Flanke (120) des Muttergewindes (134) und die verlängerte Flanke (20) des Schraubengewindes (34) einander axial gegenüberliegen.

3. Kugelgewindemechanismus (1) nach Anspruch 2, **dadurch gekennzeichnet, dass** die beiden Flanken (18, 20) des Schraubengewindes (34) eine kreisbogenförmige Krümmung in einer Schnittebene senkrecht zur Basis (16) des Schraubengewindes (34) aufweisen und die beiden Flanken (118, 120) des Muttergewindes (134) eine kreisbogenförmige Krümmung in einer Schnittebene senkrecht zum Boden (118) des Muttergewindes (134) aufweisen, und, vorzugsweise,

- die beiden Flanken (18, 20) des Schraubgewindes (34) einen identischen Krümmungsradius aufweisen; und/oder
- die beiden Flanken (118, 120) des Muttergewindes (134) einen identischen Krümmungsradius aufweisen; und/oder
- mindestens eine der beiden Flanken (18, 20) des Schraubengewindes (12) einen identischen Krümmungsradius aufweist wie mindestens eine der beiden Flanken (118, 120) des Muttergewindes (134).

4. Kugelgewindemechanismus (1) nach einem der vorstehenden Ansprüche, **dadurch gekennzeichnet, dass** $D - Y0 - \varepsilon < Y1 - D < D - Y0 + \varepsilon$; D den Abstand zwischen dem Mittelpunkt der ersten Kugel (2a) und der Bezugsachse (200) bezeichnet, $\varepsilon$ einen Spielraum für eine solche Verformung bezeichnet, dass $0 < \varepsilon < 0.05\ mm$.

5. Kugelgewindemechanismus (1) nach einem der vorstehenden Ansprüche, **dadurch gekennzeichnet, dass** die Funktion $x \rightarrow y = f(x)$ derart ist, dass für jeden Wert z zwischen 0 und $P/2 - R$, wobei R der Radius der mindestens zwei Kugeln (2) ist:

$$\begin{cases} 2f\left(\dfrac{P}{2}\right) - \varepsilon 1 < f\left(\dfrac{P}{2} + z\right) + f\left(\dfrac{P}{2} - z\right) < 2f\left(\dfrac{P}{2}\right) + \varepsilon 1 \\ mit\ \varepsilon 1 < 0,05\ mm \end{cases}$$

6. Kugelgewindemechanismus (1) nach einem der vorstehenden Ansprüche, **dadurch gekennzeichnet, dass:**

$$\frac{X0 + X1}{2} = \frac{P}{2}$$

7. Kugelgewindemechanismus (1) nach einem der vorstehenden Ansprüche, **dadurch gekennzeichnet, dass** die Funktion $x \rightarrow y = f(x)$ kontinuierlich ist.

8. Kugelgewindemechanismus (1) nach einem der vorstehenden Ansprüche, **dadurch gekennzeichnet, dass** die Funktion $x \rightarrow y = f(x)$ zwischen X0 und X1 streng steigend oder streng fallend ist.

9. Kugelgewindemechanismus (1) nach einem der vorstehenden Ansprüche, **dadurch gekennzeichnet, dass:**

$$Y1 - Y0 > 0,20 \, mm$$

10. Kugelgewindemechanismus (1) nach einem der vorstehenden Ansprüche, **dadurch gekennzeichnet, dass:**

-

$$\text{für } 0 < x < \frac{9}{10}R, \, D - \varepsilon < f(x) < D + \varepsilon$$

-

$$\text{für } P - \frac{9}{10}R < x < P, \, D - \varepsilon < f(x) < D + \varepsilon$$

D der Abstand zwischen dem Zentrum der ersten Kugel (2a) und der Referenzachse (200) ist, $\varepsilon$ ein Verzerrungs-spielraum ist, der so groß ist, dass $0 < \varepsilon < 0,05 \, mm$.

## Claims

1. A ball screw mechanism (1), comprising a screw (10) defining a reference axis (200), a nut (12) and at least two balls (2) of radius R positioned to roll on a screw thread (34) formed on the screw (10) and a nut thread (134) formed on the nut (12), the screw thread (34) and nut thread (134) having, in an active portion of the screw and nut, a helical pitch P, **characterized in that** in a sectional plane containing the reference axis (200) and passing through a center (C1) of a first ball (2a) of the at least two balls (2), the first ball being positioned in the active portion of the screw and nut, any segment (240) perpendicular to the reference axis (200), located at a distance x from the center (C1) of the first ball (2a), and having a first end which belongs to the screw thread (34) and a second end which belongs to the nut thread (134), has:

   - a center (C2) which, in an orthonormal reference frame having an abscissa axis coincident with the reference axis (200) and an ordinate axis passing through the center (C1) of the first ball (2a), has an abscissa equal to x and an ordinate y, defining a function $x \rightarrow y = f(x)$ which, when x varies between 0 and P, passes through a minimum Y0 reached for an abscissa X0 and through a maximum Y1 reached for an abscissa X1, such that the following inequalities are respected:

   $$\begin{cases} \dfrac{9}{10}R < X0 < P - \dfrac{9}{10}R \\ \dfrac{9}{10}R < X1 < P - \dfrac{9}{10}R \\ Y1 - Y0 > 0.10 \text{ mm} \end{cases}$$

   and
   - a length L defining a function $x \rightarrow L = g(x)$ which, when the abscissa x of the center of the segment (C2) varies between 0 and the helical pitch P, is always greater than 0.25 mm, and preferably greater than 0.40 mm.

2. The ball screw mechanism (1) according to claim 1, **characterized in that**

   - the screw thread (34) forms a helical inner raceway (14) facing radially away from the reference axis (200) and delimited by two opposite flanks (18, 20) of the screw thread (34) located on either side of a bottom (16) of the screw thread (34),
   - the nut thread (134) forms a helical outer raceway (114) facing radially towards the reference axis (200) and delimited by two opposite flanks (118, 120) of the nut thread (134) located on either side of a bottom (116) of the nut thread (134),
- one extended flank (120) of the two flanks of the nut thread (134) is extended towards the reference axis (200) with respect to the other of the two flanks (118) of the nut thread (134),
- one extended flank (20) of the two flanks of the screw thread (34) is extended in a radial direction opposite to the reference axis (200) with respect to the other of the two flanks (18) of the screw thread (34),
- the extended flank (120) of the nut thread (134) lies radially facing the other flank (18) of the screw thread (34) and the extended flank (20) of the screw thread (34) lies radially facing the other flank (118) of the nut thread (134), the extended flank (120) of the nut thread (134) and the extended flank (20) of the screw thread (34) facing one another axially.

3. The ball screw mechanism (1) according to claim 2, **characterized in that** the two flanks (18, 20) of the screw thread (34) have an arcuate curvature in a sectional plane perpendicular to the base (16) of the screw thread (34) and the two flanks (118, 120) of the nut thread (134) have an arcuate curvature in a sectional plane perpendicular to the bottom (118) of the nut thread (134), and, preferably,

   - the two flanks (18, 20) of the screw thread (34) have an identical radius of curvature; and/or
   - the two flanks (118, 120) of the nut thread (134) have an identical radius of curvature; and/or
   - at least one of the two flanks (18, 20) of the screw thread (12) has an identical radius of curvature as at least one of the two flanks (118, 120) of the nut thread (134).

4. The ball screw mechanism (1) according to any of the preceding claims, **characterized in that** $D - Y0 - \varepsilon < Y1 - D < D - Y0 + \varepsilon$; D designating the distance between the center of the first ball (2a) and the reference axis (200), $\varepsilon$ designating a margin of distortion such that $0 < \varepsilon < 0.05$ *mm.*

5. The ball screw mechanism (1) according to any of the preceding claims, **characterized in that** the function $x \rightarrow y = f(x)$ is such that, for any value z between 0 and $P/2 - R$, where R is the radius of the at least two balls (2):

$$\begin{cases} 2f\left(\frac{P}{2}\right) - \varepsilon 1 < f\left(\frac{P}{2} + z\right) + f\left(\frac{P}{2} - z\right) < 2f\left(\frac{P}{2}\right) + \varepsilon 1 \\ with\ \varepsilon 1 < 0.05\ mm \end{cases}$$

6. The ball screw mechanism (1) according to any of the preceding claims, **characterized in that:**

$$\frac{X0 + X1}{2} = \frac{P}{2}$$

7. The ball screw mechanism (1) according to any of the preceding claims, **characterized in that** the function $x \rightarrow y = f(x)$ is continuous.

8. The ball screw mechanism (1) according to any of the preceding claims, **characterized in that** the function $x \rightarrow y = f(x)$ is strictly increasing or strictly decreasing between X0 and X1.

9. The ball screw mechanism (1) according to any of the preceding claims, **characterized in that:**

$$Y1 - Y0 > 0.20\ mm$$

10. The ball screw mechanism (1) according to any of the preceding claims, **characterized in that:**

   -

$$for\ 0 < x < \frac{9}{10}R,\ D - \varepsilon < f(x) < D + \varepsilon$$

   -

$$\text{for } P - \frac{9}{10}R < x < P, \, D - \varepsilon < f(x) < D + \varepsilon$$

D is the distance between the center of the first ball (2a) and the reference axis (200), $\varepsilon$ is a margin of distortion such that $0 < \varepsilon < 0.05$ *mm*.

[Fig. 1]

# Fig.1

[Fig. 2]

# Fig.2

[Fig. 3]

# Fig.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102007017214